Europäisches Patentamt

European Patent Office

Office européen des brevets

(19)

(11) **EP 0 659 267 B1**

(12) **EUROPÄISCHE PATENTSCHRIFT**

(45) Veröffentlichungstag und Bekanntmachung des Hinweises auf die Patenterteilung:
**11.12.1996   Patentblatt 1996/50**

(21) Anmeldenummer: **93917558.4**

(22) Anmeldetag: **17.08.1993**

(51) Int Cl.⁶: **G01D 5/14**

(86) Internationale Anmeldenummer:
**PCT/DE93/00740**

(87) Internationale Veröffentlichungsnummer:
**WO 94/05974 (17.03.1994 Gazette 1994/07)**

(54) **ANORDNUNG ZUR GEOMETRIEERFASSUNG MIT HALL-ELEMENTEN**

POSITION-DETERMINING DEVICE USING HALL ELEMENTS

DISPOSITIF POUR LA SAISIE GEOMETRIQUE COMPORTANT DES ELEMENTS A EFFET HALL

(84) Benannte Vertragsstaaten:
**DE FR GB IT**

(30) Priorität: **09.09.1992   DE 9212159 U**

(43) Veröffentlichungstag der Anmeldung:
**28.06.1995   Patentblatt 1995/26**

(73) Patentinhaber: **SIEMENS AKTIENGESELLSCHAFT**
**80333 München (DE)**

(72) Erfinder: **MELBERT, Joachim**
**D-82041 Deisenhofen (DE)**

(56) Entgegenhaltungen:
**EP-A- 0 115 391            EP-A- 0 203 275**
**WO-A-92/10723            US-A- 4 518 918**

• **SIEMENS COMPONENTS, Bd. 25, Nr. 6, Dezember 1990, München DE, Seite 252 'Hall ICs for speed and position detection in automobiles'**

**Beschreibung**

Die Erfindung betrifft eine Anordnung mit Hall-Elementen zur Geometrieerfassung nach dem Oberbegriff des Patentanspruches 1.

Solche Anordnungen sind prinzipiell u.a. aus der EP 0 115 391 A2 bekannt, in der eine Sensoranordnung zur Positionserfassung mit vier Hall-Elementen beschrieben wird, die in vorgegebenem Abstand voneinander angeordnet sind. Vorzugsweise sind hierbei jeweils die analogen Ausgangsgrößen zweier Hall-Elemente mit umgekehrtem Vorzeichen einander überlagert, so daß nur die relative Magnetfeldänderung eines auf die Sensoranordnung wirkenden Magnetfeldes ausgewertet wird. Als Geber für ein veränderliches Magnetfeld wird eine symmetrische, im weitesten Sinne zahnradförmige, rotierende Vorrichtung verwendet, wobei der Abstand zwischen zwei gleichartigen, durch diese Vorrichtung bewirkten Magnetfeldbeeinflussungen groß ist gegenüber dem Abstand der einzelnen Hall-Elemente. Die vier Hall-Elemente liefern die zweite Ableitung der Magnetfeldänderung nach der Zeit. Es werden vier Hall-Elemente verwendet, weil dadurch bei gleicher Magnetfeldänderung ein höherer Signalhub erzielt wird. Die in der EP 0 115 391 A2 beschriebene Sensoranordnung dient der relativen Positionserfassung eines rotierenden Teiles mit Hilfe der Ermittlung der Magnetfelddifferenz zwischen jeweils zwei Hall-Elementen.

In manchen Anwendungsfällen für Anordnungen zur Geometrieerfassung, insbesondere im Fahrzeugbau, ist es erforderlich, die tatsächliche momentane Geometrie jederzeit präzise festzustellen. Dies ist mit einer Anordnung nach der EP 0 115 391 A2 nicht möglich. In dem Buch "Halbleitersensoren", Hrsg. Prof. Dr. Ing. W.J. Bartz et al., Expert Verlag werden im Kapitel 6.4 auf Seite 259 ff., insbesondere im Teil 6.4.3 "Analoge Positionserfassung" auf den Seiten 265 bis 267 Positionserfassungsanordnungen prinzipiell beschrieben, die diese Kriterien erfüllen würden. Hierbei wird einfach die Hall-Spannung in Abhängigkeit von dem Abstand eines Hall-Elementes von einem beweglichen Permanentmagneten als Abstandskriterium herangezogen. Wie insbesondere im Bild 6.20 auf Seite 625 zu erkennen ist, zeichnet sich eine solche Anordnung jedoch durch einen sehr geringen Bereich mit linearem Zusammenhang zwischen Entfernungsänderung und Magnetfeldänderung aus. Ebenso weist sie eine starke Abhängigkeit von z.B. der Temperatur auf.

Die Anwendung eines solchen Prinzips in einem Drosselklappen-Winkelsensor für Verbrennungsmotoren ist in der DE 38 26 408 A1 beschrieben. Hier wird ein Drosselklappenwinkelsensor für Verbrennungsmotoren mit einem an einem Ende der Drosselklappenwelle angebrachten Permanentmagneten beschrieben, der einen konstanten magnetischen Fluß erzeugt, dessen Richtung in Abhängigkeit von der Drehung der Drosselklappenwelle gedreht wird. Hierbei ist im wesentlichen parallel zu der Hauptrichtung des außen verlaufenden magnetischen Flusses des Permanentmagneten und in einem Abstand von dem Permanentmagneten ein magnetisch empfindliches Element, wie z.B. ein Hall-Element angeordnet, mittels dessen die Änderung der magnetischen Flußdichte als Folge der Drehung des Permanentmagneten gemessen wird. Die gemessene Änderung der magnetischen Flußdichte wird hierbei über einen verstärkenden elektrischen Stromkreis in eine entsprechende Änderung eines elektrischen Signales umgewandelt.

Der Ausgangsgröße des magnetisch empfindlichen Elementes ist hierbei üblicherweise eine von dem Magnetfeld unabhängige Gleichgröße, ein sogenannter Offset überlagert. Bei einem Ausgangsstrom handelt es sich hierbei um einen überlagerten Gleichstrom, bei einer Ausgangsspannung um eine überlagerte Gleichspannung. Dieser Offset sowie die Verstärkung und die Linearität von Hall-Elementen schwanken sehr stark von Element zu Element und mit der Temperatur. Außerdem ist der Linearitätsbereich von magnetisch empfindlichen Elementen, wie z.B. Hall-Elementen sehr begrenzt, so daß bei einer zuvor beschriebenen, bekannten Anordnung ein aufwendiger Abgleich erforderlich ist und außerdem aufgrund der erwähnten Probleme die Auflösung, d.h. der Dynamikbereich bzw. die Präzision des Meßergebnisses einer solchen Anordnung nicht sehr groß ist. In Anwendungsfällen, in denen eine präzise Geometrieerfassung auch gewährleistet sein soll, wenn kurzzeitige Spannungsausfälle auftreten können, werden daher meistens Präzisionspotentiometer verwendet. Bei diesen treten jedoch Probleme durch Alterung bzw. durch schlechte Kontakte infolge von Verschmutzung oder Korrosion auf.

Aufgabe der vorliegenden Erfindung ist das Bereitstellen einer Anordnung zur Geometrieerfassung mit Hilfe von Hall-Elementen, bei der die vorgenannten Probleme nicht oder nur in sehr geringem Maße auftreten.

Diese Aufgabe wird gelöst durch eine Anordnung mit den Merkmalen des Patentanspruches 1. Günstige Ausgestaltungsformen sind Gegenstand von abhängigen Ansprüchen.

Eine erfindungsgemäße Anordnung zur Geometrieerfassung enthält eine Vielzahl von Hall-Elementen, die entweder entlang einer Geraden oder entlang einer vorgegebenen Linie in vorgegebenem Abstand voneinander angeordnet sind und aus einer Interpolationsschaltung, die mindestens die analoge Ausgangsgröße von zwei Hall-Elementen interpoliert, mit dem Ziel ein gewünschtes elektrisches Ausgangssignal als Funktion der magnetischen Eingangsgröße zu erhalten. Mit einer solchen Anordnung läßt sich die geometrische Verteilung eines konstanten Magnetfeldes entlang der Hall-Elementekette erfassen. Hierbei werden die linearen Bereiche der einzelnen Hall-Elemente durch Interpolation der Ausgangsgrößen der einzelnen Hall-Elemente und in Abhängigkeit von der geometrischen Anordnung der einzelnen Hall-Elemente zueinander derart überlagert, daß die Gesamtanordnung einen sehr großen Bereich mit linearem Zusammenhang zwischen der Geometrieänderung des zu erfassenden Magnetfeldes und dem Ausgangssignal der Gesamtanordnung hat. Ist durch die Gesamtanordnung sichergestellt, daß die von der Hall-Elementeanordnung erfaßte magnetische Induktion eindeutig der relativen geometrischen Anordnung zwischen der Hall-Elementeanordnung und einem Gegenstand zugeordnet werden kann, dessen geometrische Lage erfaßt werden soll, so ist jedem Pegel des Ausgangssignales der Interpolationsschaltung eindeutig eine zu erfassende geometrische Lage zuordenbar. Hierbei kann durch Variation der Abstände zwischen einzelnen Hall-Elementen, durch Variation des Arbeitspunktes der einzelnen Hall-Elemente sowie durch entsprechende Dimensionierung der Interpolationsschaltung ein linearer Zusammenhang zwischen der zu erfassenden geometrischen Größe und dem Analogwert des Ausgangssignales der Interpolationsschaltung erreicht werden.

Eine Linearisierung des Zusammenhanges zwischen dem zu erfassenden geometrischen Zusammenhang und dem elektrischen Ausgangssignal der Anordnung innerhalb der vorzugsweise monolithisch integrierten Schaltung erleichtert den Aufbau und den Abgleich einer Gesamtanordnung sehr. Es muß lediglich noch sichergestellt werden, daß zwischen dem zu erfassenden geometrischen Zusammenhang, beispielsweise einer Drosselklappenstellung, und der geometrischen Verteilung eines magnetischen Gleichfeldes über der Hall-Elementeanordnung ein linearer Zusammenhang besteht.

Bei einer erfindungsgemäßen Anordnung wird hierbei die geometrische Anordnung eines magnetischen Gleichfeldes erfaßt. Demgegenüber wird bei der bekannten Anordnung eine durch die Geometrieänderung bedingte Änderung der Stärke des Magnetfeldes unabhängig von seiner geometrischen Verteilung erfaßt.

Nachstehend wird die Erfindung anhand der Figuren näher erläutert.

Es zeigt:

Figur 1    in schematischer, perspektivischer Darstellung eine Ausgestaltungsform einer erfindungsgemäßen Anordnung mit einer Vorrichtung mit Magnetfeldquelle und einer Anordnung aus einer Vielzahl von Hall-Elementen, die entlang einer im Beispiel geraden Linie angeordnet sind und mit einer Interpolationsschaltung;

Figur 2a    in schematischer Darstellung eine Vielzahl von Hall-Elementen, wie sie in einer Anordnung nach Figur 1 eingesetzt sein kann;

Figur 2b    die Magnetfeldverteilung bzw. die magnetische Induktion B in Abhängigkeit vom Ort, wie sie in einer Anordnung nach Figur 1 auf die Vielzahl der Hall-Elemente wirkt;

Figur 2c    in schematischer Darstellung den ortsabhängigen Hall-Spannungsverlauf für die einzelnen Hall-Elemente nach Figur 2a;

Figur 3a    eine mögliche Ausgestaltungsform einer Interpolationsschaltung für eine erfindungsgemäße Anordnung, bei der jedem Hall-Element ein Differenzverstärker zugeordnet ist;

Figur 3b    den Signalverlauf des nichtinvertierenden Ausganges einer Interpolationsschaltung nach Figur 3a sowie die entsprechenden Signalverläufe für die einzelnen Differenzverstärkeranordnungen dieser Interpolationsschaltung;

Figur 3c    eine weitere mögliche Ausgestaltungsform einer Interpolationsschaltung;

Figur 4    eine weitere mögliche Ausgestaltungsform einer Blende in Verbindung mit einer Abschirmung zur Verwendung in einer Vorrichtung mit Magnetfeldquelle in Figur 1, die geeignet ist, eine lokale Magnetfeldänderung in Longitudinalrichtung in Abhängigkeit von einem Drehwinkel zu bewirken.

Figur 5    eine weitere mögliche Ausgestaltungsform einer erfindungsgemäßen Anordnung.

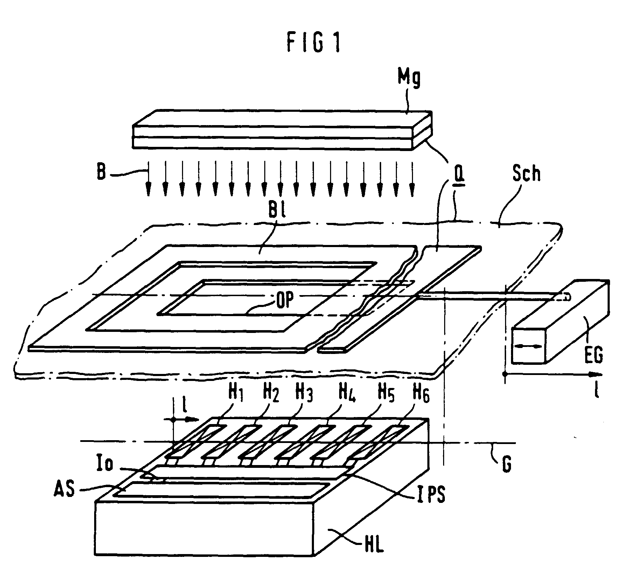

Figur 1 zeigt in schematischer Darstellung eine Ausgestaltungsform einer Anordnung zur Erfassung eines geometrischen Zusammenhanges mit einer Vorrichtung Q mit Magnetfeldquelle Mg. Die Magnetfeldquelle Mg ist vorzugsweise als Permanentmagnet ausgebildet und stellt in einem Ausführungsbeispiel nach Figur 1 ein konstantes flächenverteiltes Magnetfeld mit der magnetischen Induktion B bereit. Die Anordnung nach Figur 1 enthält sechs Hall-Elemente $H_1$, $H_2$, $H_3$, $H_4$, $H_5$ und $H_6$, die entlang einer im Ausführungsbeispiel geraden Linie G derart angeordnet sind, daß die Magnetfeldlinien der Magnetfeldquelle Mg im wesentlichen parallel zueinander bezüglich der Hall-Elementeanordnung gerichtet sind. Die Vorrichtung mit Magnetfeldquelle Q hat eine mindestens zwischen der Magnetfeldquelle Mg und der Hall-Elementeanordnung $H_1$... sich erstreckende Abschirmvorrichtung Sch, die im Bereich zwischen der Magnetfeldquelle Mg und der Hall-Elementeanordnung eine vorgegebene Öffnung OP aufweist. Diese Öffnung OP kann von einer Blende BL ganz oder teilweise abgedeckt werden. In dem gezeigten Ausführungsbeispiel, bei entlang einer geraden Linie G angeordneten Hall-Elementen $H_1$...$H_6$ ist die Öffnung OP länglich und erstreckt sich parallel zu der geraden Linie G. Die Blende BL ist in Abhängigkeit von der Bewegung eines Gegenstandes EG, dessen relative Lage zu der Hall-Elementeanordnung $H_1$...$H_6$ zu erfassen ist, entlang einer Linie, die sich parallel zur geraden Linie G erstreckt, bewegbar. Hierbei ist die Öffnungsbreite der Blende in Longitudinalrichtung abhängig von der Moment anlage der Blende und somit des Gegenstandes EG entlang einer Strecke 1. Bei dieser Anordnung stellt die Vorrichtung Q mit der Magnetfeldquelle Mg in Abhängigkeit von der momentanen Lage des Gegenstandes EG über einem bestimmten Bereich der Vielzahl von Hall-Elementen ein pro Flächeneinheit bzw. Längeneinheit im wesentlichen gleichmäßiges Magnetfeld bereit. Die mit diesem Magnetfeld bzw. der davon abhängigen magnetischen Induktion beaufschlagten Hall-Elemente liefern jeweils eine von der magnetischen Induktion abhängige Hall-Spannung an ihrem Ausgang. Die Ausgänge der einzelnen Hall-Elemente $H_1$, $H_2$...$H_6$ sind an eine Interpolationsschaltung IPS geschaltet. Diese Interpolationsschaltung IPS stellt an einem Ausgang in Abhängigkeit von den Hall-Spannungen der einzelnen Hall-Elemente ein Signal Io bereit. Der Ausgang der Interpolationsschaltung IPS ist mit einem Eingang einer Auswerteschaltung AS verbunden. Die Vielzahl der Hall-Elemente, die Interpolationsschaltung und die Auswerteschaltung sind in dem Ausführungsbeispiel nach Figur 1 vorzugsweise in einem einzigen Halbleiterkörper HL integriert. Die Auswerteschaltung AS kann je nach Anwendungsfall unterschiedlich gestaltet sein. Insbesondere kann sie einen Analog-Digital-Wandler enthalten.

Figur 4 zeigt eine alternative Ausgestaltungsform einer Vorrichtung mit Magnetfeldquelle für eine Anordnung nach Figur 1. Die Schirmvorrichtung SCH hat hierbei eine schlitzförmige, im wesentlichen längliche Öffnung OP, die zwischen der Magnetfeldquelle (s. Figur 1) und der Hall-Elementeanordnung (s. Figur 1) parallel zur Ausrichtungsgeraden G der Hall-Elemente ausgerichtet ist. Die Blende BL1 hat eine besonders gestaltete kurvenförmige Kante K und ist drehbar gelagert in einem Rotationspunkt RP, der sich auf der Mittellinie der Öffnung OP in Längsrichtung befindet. Die Kante K ist derartig geformt, daß eine Drehwinkel änderung der Blende BL1 zu einer hierzu proportionalen Längenänderung der von der Blende BL1 und der Öffnung OP der Schirmvorrichtung freigegebenen Öffnung führt. Die gezeigte Ausgestaltungsform ist geeignet, eine Winkeldrehung von 90° in eine hierzu proportionale Längenänderung umzuwandeln.

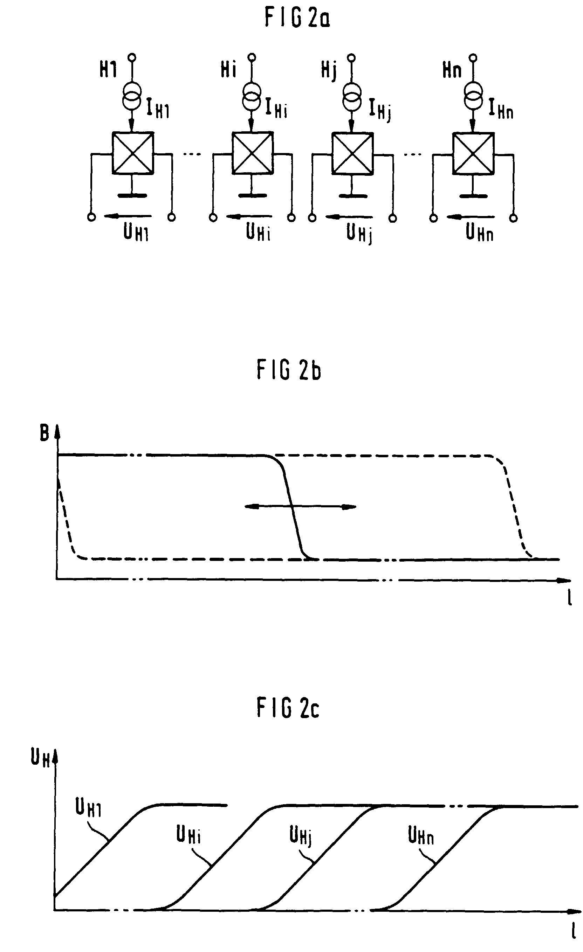

Figur 2a zeigt in schematischer Darstellung eine Reihe von entlang einer geraden Linie angeordneten Hall-Elementen. Hierbei ist das erste Element H1, zwei benachbarte Elemente Hi und Hj und das letzte Element Hn dargestellt. Die Gesamtzahl der Hall-Elemente soll hierbei n sein, wobei n eine ganze, positive Zahl größer als 1 ist. In Figur 2a ist für jedes Hall-Element eine Arbeitspunktstromquelle $I_{H1}$, $I_{Hi}$...$I_{Hn}$ dargestellt. Außerdem sind die Ausgangsspannungen der einzelnen Hall-Elemente $U_{H1}$, $U_{Hi}$, $U_{Hj}$ und $U_{Hn}$ gezeigt.

Figur 2b zeigt den potentiellen Verlauf der magnetischen Induktion über der Hall-Elementeanordnung in Abhängigkeit von der Strecke 1. Hierbei sind die Grenzwerte gestrichelt dargestellt und ein beispielhafter Wert ist in Vollinie gezeigt. Wie zu erkennen ist, wirkt in einer erfindungsgemäßen Anordnung vorzugsweise eine konstante magnetische Induktion längenabhängig auf die Hall-Elementeanordnung.

Figur 2c zeigt die von den jeweiligen Hall-Elementen H1, Hi, Hj bzw. Hn bereitgestellten Hall-Spannungen $U_{H1}$, $U_{Hi}$, $U_{Hj}$ bzw. $U_{Hn}$ in Abhängigkeit von der Länge 1 in schematischer Darstellung.

Im einfachsten Fall kann eine Auswertung derart erfolgen, daß die Hallelemente in Reihe geschaltet werden, so daß die Einzelausgangsspannungen aufsummiert werden. Dann ergibt sich ein quasi linearer Zusammenhang, da die einzelnen Hallelemente in Teilbereichen eine lineare Ausgangsspannung liefern.

Figur 3a zeigt eine mögliche Ausgestaltungsform einer Interpolationsschaltung IPS zur Verwendung in einer erfindungsgemäßen Anordnung. Die gezeigte Interpolationsschaltung sieht für jedes Hall-Element H1,... Hi,...Hn eine Differenzverstärkerstufe mit einem Spannungssignaleingang und einem Stromsignalausgang vor. Die Stromsignalausgänge der einzelnen Differenzverstärkerstufen DVi, DVj sind in einem gemeinsamen Stromknoten zusammengefaßt. Hierbei sind die das positive Ausgangssignal $Io_i^+$, $Io_j^+$,... führenden Ausgänge der Differenzverstärkerstufen DVi, DVj,... in einem gemeinsamen Stromknoten $\Sigma Io^+$ zusammengefaßt und die das negative Stromausgangssignal $Io_i^-$, $Io_j^-$,... führenden Signalausgänge der Differenzverstärkerstufen DVi, DVj,... bilden den gemeinsamen Stromausgang $\Sigma Io^-$. Die Arbeitspunkte der einzelnen Differenzverstärkerstufen DVi, DVj,... sind jeweils über eine Stromquelle mit einem Strom $Io_i$, $Io_j$,... eingestellt. Jede Differenzverstärkerstufe hat einen, vorzugsweise symmetrischen Signaleingang, der mit dem Signalausgang eines einzelnen Hall-Elementes H1, ...Hi, Hj...Hn zusammengeschaltet ist und somit mit der entsprechenden Hall-Spannung $U_{Hi}$, $U_{Hj}$... beaufschlagt ist. Für die in Figur 3a gezeigte Anordnung gilt, daß der Gesamtstrom aller den jeweiligen Arbeitspunkt einstellenden Stromquellen $Io_i$, $Io_j$,... konstant ist und den Strom $\Sigma Io$ bildet. Der Strom Io setzt sich hierbei zusammen aus den positiven Signalströmen und den negativen Signalströmen, so daß gilt:

$$\Sigma Io = \Sigma Io^- + \Sigma Io^+.$$

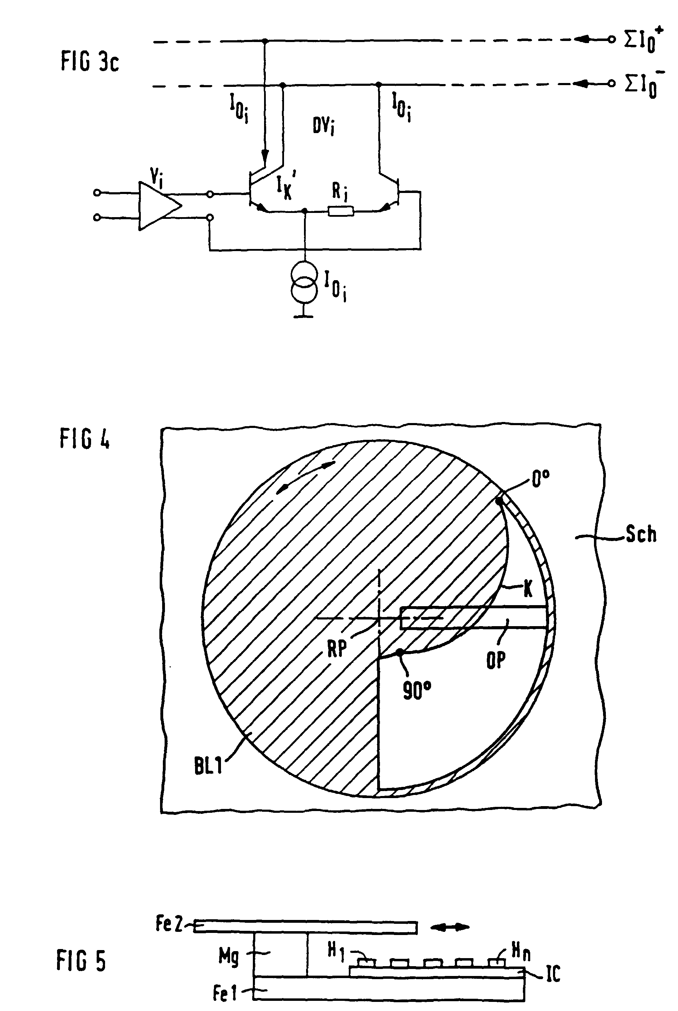

Figur 3c zeigt eine weitere Ausgestaltung der in Figur 3a gezeigten Interpolationsschaltung. Sie weist gegenüber der Schaltung gemäß Figur 3a wahlweise folgende Modifikationen auf. Zusätzlich ist zwischen die Emitter der Differenzverstärkerstufe ein Gegenkopplungswiderstand $R_i$ zwischengeschaltet. Desweiteren können Kollektorteilströme $I_K'$ von einem der Transistoren zur Gegenkopplung mit dem jeweiligen anderen Stromknoten $\Sigma I_o^+$ oder $\Sigma I_o^-$ verbunden werden. Schließlich kann den Eingängen jeder Auswertestufe ein individueller Trennverstärker $V_i$ mit wählbarer Verstärkung vorgeschaltet werden.

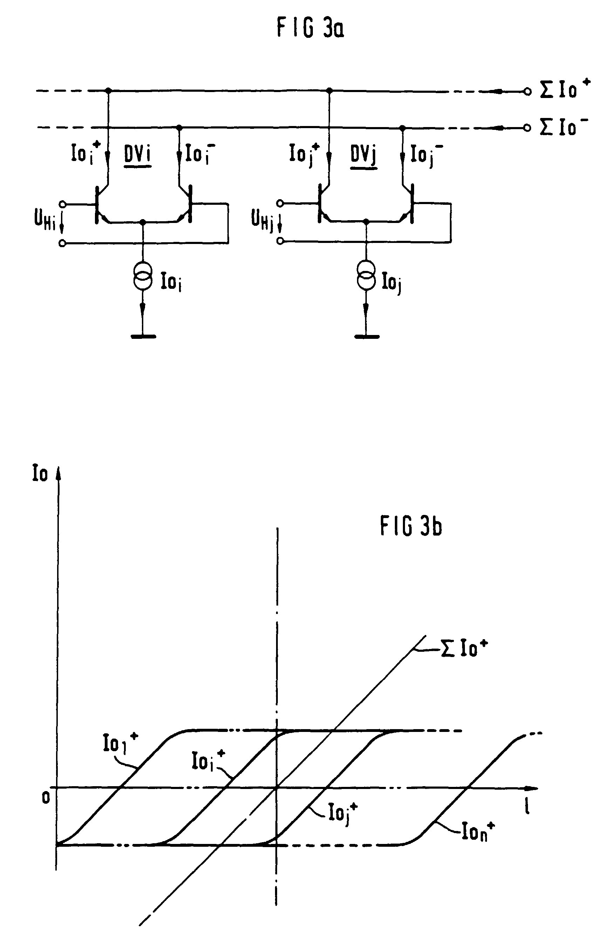

Figur 3b zeigt den Verlauf der einzelnen positiven Stromsignale $Io_1^+$, $Io_i^+$, $Io_i^+$,... $Io_n^+$ in einer Anordnung nach Figur 3a sowie den Verlauf des Stromsignales $\Sigma Io^+$ der Gesamtanordnung für den Fall, daß eine gerade Anzahl von Hall-Elementen verwendet wird. Die Darstellung nach Figur 3b ist idealisiert, gibt jedoch weitgehend den Zusammenhang zwischen einem ortsabhängigen Magnetfeld und einem Ausgangssignal einer Interpolationsschaltung IPS für eine erfindungsgemäße Anordnung, wie sie beispielsweise in Figur 1 dargestellt ist. Die Linearität des Zusammenhanges zwischen Ort und Ausgangssignal kann hierbei durch unterschiedliche Maßnahmen optimiert werden. Einerseits können die Hall-Sensoren in unterschiedlichem Abstand zueinander angeordnet werden oder insgesamt unterschiedlich ausgeführt sein. Außerdem können die Arbeitspunktströme $Io_1,\ldots Io_i, Io_j,\ldots Io_n$ der einzelnen Differenzverstärkerstufe $DVi,\ldots$ einer Interpolationsschaltung unterschiedlich groß sein. Weiterhin können die Differenzverstärker unterschiedliche Geometrie aufweisen. Auch eine Gegenkopplung in den Differenzverstärkern einer Interpolationsschaltung IPS führt zu einer Veränderung des ortsabhängigen Ausgangssignales der Gesamtanordnung. Eine weitere Möglichkeit, eine Interpolationsschaltung auszuführen, besteht darin, kreuzgekoppelte Differenzverstärker zu verwenden, wobei in bi-polarer Ausgestaltung jeweils die Basisanschlüsse zweier Transistoren mit unterschiedlich großen Emitterflächen zusammengeschaltet sind und ein Eingangstor der Differenzverstärkerschaltung bilden, wobei darüber hinaus die Emitteranschlüsse der vier eine Differenzverstärkerstufe bildenden Transistoren zusammengeschaltet sind und über eine Konstantstromquelle an ein Versorgungspotential geschaltet sind und wobei die Kollektoranschlüsse der Transistoren zusammengeschaltet sind, die sich sowohl in der Emitterfläche als auch im Signaleingang unterscheiden.

Figur 5 zeigt eine weitere Ausführungsform der erfindungsgemäßen Anordnung. In der schematischen Darstellung ist wiederum eine Magnetfeldquelle Mg zur Erzeugung eines parallelen Magnetfeldes zwischen zwei Polen ähnlich einem Hufeisenmagnet vorgesehen. Der erste Pol Fe1 ist mit der Magnetfeldquelle $M_g$ fest verbunden. Der zweite ist auf seiner Längsachse horizontal beweglich angebracht. Im dargestellten Beispiel ist der erste Pol Fe1 unterhalb und der zweite bewegliche Pol Fe2 oberhalb der Magnetfeldquelle Mg angebracht. Zwischen den Polen Fe1 und Fe2 ist auf dem Pol Fe1 eine Vielzahl von Hallelementen $H_1\ldots H_n$ angebracht. Diese können beispielsweise in einer integrierten Schaltung integriert werden. Durch Bewegung des Pols Fe2 werden mehr oder weniger Hallelemente $H_1$ bis $H_n$ von einem konstanten Magnetfeld durchflossen. Bei Auswertung mittels einer der verstehenden Auswerteschaltungen kann so ein zur Bewegung des Pols Fe2 lineare Ausgangsspannung erzeugt werden.

Ein Vorteil einer erfindungsgemäßen Anordnung zur Geometrieerfassung mit Hall-Elementen besteht darin, daß die bei bekannten Anordnungen gegebene Temperaturabhängigkeit und Versorgungsspannungsabhängigkeit des Offset-Signales, der Linearität und der Verstärkung im wesentlichen um einen Faktor verringert werden, der dem Kehrwert der Anzahl der verwendeten Hall-Elemente entspricht und, daß weitaus größere Geometrien erfaßbar sind.

**Patentansprüche**

1. Anordnung zur Erfassung eines geometrische Zusammenhanges mit einer Vorrichtung mit Magnetfeldquelle (Mg), einer Anordnung aus einer Vielzahl von Hall-Elementen (H1-Hn) und einem Gegenstand, dessen geometrische Lage erfaßt werden soll, mit den Merkmalen:

   - die Vorrichtung mit Magnetfeldquelle stellt der Hall-Elementeanordnung (H1-Hn) eine von der relativen geometrischen Lage zwischen der Hall-Elementeanordnung und dem Gegenstand abhängige magnetische Induktion bereit,
   - die Hall-Elementeanordnung wandelt diese geometrieabhängige magnetische Induktion in ein elektrisches Analogsignal um,
   - die Hall-Elemente sind in vorgegebenem Abstand voneinander entlang einer vorgegebenen Linie angeordnet,
   - es ist eine Interpolationsschaltung (IPS) vorhanden, die die analogen Ausgangssignale jeweils mindestens zweier Hall-Elemente zu einem gemeinsamen analogen Ausgangssignal interpoliert,

   **dadurch gekennzeichnet**, daß die Interpolationsschaltung für jedes Hall-Element (H1,...,Hn) eine Differenzverstarkerstufe ($D_{vi}$, $D_{vj}$) mit einem Spannungssignaleingang ($U_{hi}$; $U_{hj}$) und einem Stromsignalausgang ($I_{oi}^+$, $I_{oi}^-$; $I_{oj}^+$, $I_{oj}^-$) zu einem gemeisamen Stromknoten ($\Sigma I_o$, $\Sigma I_o$) zusammengefaßt aufweist, und die Differenzverstärker eine jeweils individuell eingestellte Verstärkung aufweisen.

2. Anordnung nach Anspruch 1, **dadurch gekennzeichnet**, daß die Abstände zwischen zwei benachbarten Hall-Elementen jeweils gleich groß sind.

3. Anordnung nach einem der Ansprüche 1 oder 2, **dadurch gekennzeichnet**, daß die Hall-Elemente entlang einer geraden Linie angeordnet sind.

4. Anordnung nach einem der Ansprüche 1 oder 2, **dadurch gekennzeichnet**, daß die Hall-Elemente entlang einer gekrümmten Linie angeordnet sind.

5. Anordnung nach irgendeinem der vorhergehenden Ansprüche, **dadurch gekennzeichnet**, daß die Hall-Elementeanordnung und die Interpolationsschaltung gemeinsam monolithisch integriert sind.

6. Anordnung nach Anspruch 1,
   **dadurch gekennzeichnet**,
   daß eine Differenzverstärkerstufe aus zwei Transistoren besteht deren Emitter über eine Stromquelle ($I_{oi}$; $I_{oj}$) mit einem Bezugspotential verbunden sind, an deren Basisanschlüssen die Eingangsspannung zuführbar ist und an deren Kollektoren der Ausgangsstrom abgreifbar ist.

7. Anordnung nach Anspruch 6,
   **dadurch gekennzeichnet**,
   daß zwischen den Emittern der Transistoren ein Widerstand ($R_i$) geschaltet ist.

8. Anordnung nach Anspruch 6 oder 7,
   **dadurch gekennzeichnet**,
   daß über einen weiteren Kollektoranschluß eines Transistors ein Kollektorteilstrom ($I_K'$) dem jeweiligen Kollektoranschluß des anderen Transistors zugeführt wird.

9. Anordnung nach einem der Ansprüche 6 bis 8,
   **dadurch gekennzeichnet**,
   daß ein Trennverstärker ($V_i$) vorhanden ist, der dem Eingang einer Differenzverstärkerstufe ($DV_i$, $DV_j$) vorgeschaltet ist und der eine einstellbare Verstärkung aufweist.

## Claims

1. Arrangement for detecting a geometric relation with a device with magnetic field source (Mg), an arrangement consisting of a multiplicity of Hall elements (H1-Hn) and an object whose geometric position is to be detected, with the features:

   - the device with magnetic field source provides the Hall element arrangement (H1-Hn) with a magnetic induction which is dependent on the relative geometric position between the Hall element arrangement and the object,
   - the Hall element arrangement converts this geometry-dependent magnetic induction into an analog electric signal,
   - the Hall elements are arranged at a prescribed distance from one another along a prescribed line,
   - an interpolation circuit (IPS) is provided which interpolates the analog output signals of in each case at least two Hall elements to form a common analog output signal, characterized in that the interpolation circuit for each Hall element (H1,...,Hn) a difference amplifier stage ($D_{vi}$, $D_{vj}$) with a voltage signal input ($U_{hi}$; $U_{hj}$) and a current signal output ($I_{oi}^+$, $I_{oi}^-$; $I_{oj}^+$, $I_{oj}^-$) combined to form a common current node ($\Sigma I_o$, $\Sigma I_o$), and the difference amplifiers have an amplification which in each case is adjusted individually.

2. Arrangement according to Claim 1, characterized in that the distances between two adjacent Hall elements are of identical size in each case.

3. Arrangement according to one of Claims 1 or 2, characterized in that the Hall elements are arranged along a straight line.

4. Arrangement according to one of Claims 1 or 2, characterized in that the Hall elements are arranged along a curved line.

5. Arrangement according to any one of the preceding claims, characterized in that the Hall element arrangement and the interpolation circuit are monolithically integrated together.

6. Arrangement according to Claim 1, characterized in that a difference amplifier stage consists of two transistors whose emitters are connected via a current source ($I_{oi}$; $I_{oj}$) to a reference potential, to whose base terminals the input voltage can be fed and at whose collectors the output current can be tapped.

7. Arrangement according to Claim 6, characterized in that a resistor ($R_i$) is connected between the emitters of the transistors.

8. Arrangement according to Claim 6 or 7, characterized in that a collector component current ($I_K'$) is fed, via a further collector terminal of a transistor, to the respective collector terminal of the other transistor.

9. Arrangement according to one of Claims 6 to 8, characterized in that an isolating amplifier ($V_i$) is present which is connected upstream of the input of a difference amplifier stage ($DV_i$, $DV_j$) and which has an adjustable amplification.

## Revendications

1. Dispositif pour la détection d'une relation géométrique comportant un dispositif comportant une source de champ magnétique (Mg), un dispositif composé de multiples éléments à effet Hall ($H_1$ à $H_n$), et d'un objet dont la position géométrique doit être détectée, avec les caractéristiques :

   - le dispositif comportant la source de champ magnétique fournit à l'ensemble d'éléments à effet Hall ($H_1$ à $H_n$) une induction magnétique

dépendant de la position géométrique relative entre l'ensemble d'éléments à effet Hall et l'objet,

- l'ensemble d'éléments à effet Hall transforme cette induction magnétique dépendant de la géométrie en un signal électrique analogique,
- les éléments à effet Hall sont disposés le long d'une ligne prédéterminée à une certaine distance, prédéterminée, les uns des autres,
- il est prévu un circuit d'interpolation (IPS) qui interpole les signaux analogiques de sortie d'au moins deux éléments à effet Hall chaque fois en un signal de sortie analogique commun,

caractérisé par le fait que le circuit d'interpolation comporte pour chaque élément à effet Hall ($H_1$, ..., $H_n$) un étage à amplificateur différentiel ($DV_i$, $DV_j$) avec une entrée de signal de tension ($U_{hi}$ ; $U_{hj}$) et une sortie de signal de courant ($I_{oi}+$, $I_{oi}-$ ; $I_{oj}+$, $I_{oj}-$), ces dernières étant regroupées en un noeud de courant commun ($\Sigma I_o-$, $\Sigma I_o+$), et par le fait que les amplificateurs différentiels présentent chacun une amplification réglable individuellement.

2. Dispositif selon la revendication 1, caractérisé par le fait que les distances entre deux éléments à effet Hall voisins sont toutes identiques.

3. Dispositif selon l'une des revendications 1 ou 2, caractérisé par le fait que les éléments à effet Hall sont disposés le long d'une ligne droite.

4. Dispositif selon l'une des revendications 1 ou 2, caractérisé par le fait que les éléments à effet Hall sont disposés le long d'une ligne courbe.

5. Dispositif selon l'une des revendications précédentes, caractérisé par le fait que l'ensemble d'éléments à effet Hall et le circuit d'interpolation sont intégrés ensemble de façon monolithique.

6. Dispositif selon la revendication 1, caractérisé par le fait qu'un étage à amplificateur différentiel est constitué de deux transistors, dont les émetteurs sont reliés à un potentiel de référence par l'intermédiaire d'une source de courant ($I_{oi}$ ; $I_{oj}$), aux bornes de bases desquelles la tension d'entrée peut être envoyée et aux collecteurs desquels le courant de sortie peut être prélevé.

7. Dispositif selon la revendication 6, caractérisé par le fait qu'une résistance ($R_i$) est branchée entre les émetteurs des transistors.

8. Dispositif selon la revendication 6 ou 7, caractérisé par le fait qu'un courant partiel de collecteur ($I_{K'}$) est envoyé par l'intermédiaire d'une autre borne de collecteur d'un transistor à la borne respective de collecteur de l'autre transistor.

9. Dispositif selon l'une des revendications 6 à 8, caractérisé par le fait qu'il est prévu un amplificateur séparateur ($V_i$) qui est branché en amont de l'entrée d'un étage à amplificateur différentiel ($DV_i$, $DV_j$) et qui présente une amplification réglable.

# FIG 1

## FIG 2a

## FIG 2b

## FIG 2c

F I G 3a

F I G 3b

FIG 3c

$\Sigma l_0^+$

$\Sigma l_0^-$

$I_{0_i}$ $DV_i$ $I_{0_i}$

$V_i$ $I_K{}'$ $R_i$

$I_{0_i}$

FIG 4

Sch

0°

K

RP

OP

90°

BL1

Fe2

FIG 5

Mg $H_1$ $H_n$

IC

Fe1